# EUROPEAN PATENT SPECIFICATION

(11) **EP 0 715 256 B1**
(45) Date of publication and mention of the grant of the patent: **23.07.1997**
(21) Application number: 96100926.3
(22) Date of filing: 17.08.1989
(51) Int. Cl.: G06F 9/44

(54) **Rule verifying apparatus and method for fuzzy inference**
Regelprüfungeinrichtung und Fuzzy-Interferenzverfahren
Appareil de vérification de règle et méthode d'interférence flou

(30) Priority: 18.08.1988 JP 203912/88
(43) Date of publication of application: 05.06.1996
(62) Divisional of application: 89115189.6
(73) Proprietor: OMRON CORPORATION, Kyoto 616 (JP)
(72) Inventor: Yamakawa, Takeshi, Iizuka-shi, Fukuoka-ken (JP); Ishida, Tsutomu, c/o Patent Center, Nagaokakyo-shi, Kyoto 617 (JP)
(74) Representative: WILHELMS, KILIAN & PARTNER Patentanwälte

(56) References cited:
- PROCEEDINGS OF THE ISMM INTERNATIONAL SYMPOSIUM. COMPUTER APPLICATIONS IN DESIGN, SIMULATION AND ANALYSIS, HONOLULU, HI, USA, 1-3 FEB. 1988, ISBN 0-88986-136-6, 1989, ANAHEIM, CA, USA, ACTA PRESS, USA, pages 157-160, LOONEY C G 'Learning in three-plex fuzzy logic networks'
- PROCEEDINGS OF THE INTERNATIONAL SYMPOSIUM ON MULTIPLE VALUED LOGIC, PALMA DE MALLORCA, MAY 24 - 26, 1988, no. SYMP. 18, 24 May 1988 INSTITUTE OF ELECTRICAL AND ELECTRONICS ENGINEERS, pages 144-151, XP 000169604 LOPEZ DE MANTARAS R ET AL 'A FUZZY LOGIC APPROACH TO THE MANAGEMENT OF LINGUISTICALLY EXPRESSED UNCERTAINTY'
- PROCEEDINGS OF THE INTERNATIONAL CONFERENCE ON NEURAL NETWORKS, SAN DIEGO, JULY 24 - 27, 1988, vol. VOL. 1, no. -, 24 July 1988 INSTITUTE OF ELECTRICAL AND ELECTRONICS ENGINEERS, pages 325-333, XP 000093653 SIETSMA J ET AL 'NEURAL NET PRUNING - WHY AND HOW'

## Description

### BACKGROUND OF THE INVENTION

### Field of the Invention

The present invention relates to a rule rule verifying apparatus for fuzzy control and is a divisional application to the application 89 115 189.6 published as EP-A-0 355 716.

### Description of the Background Art

A fuzzy control device for performing control by fuzzy inferences or fuzzy arithmetic operations has been in the spotlight. The fuzzy control device is also referred to as a fuzzy inference arithmetic unit, a fuzzy controller or a fuzzy computer, which is realized by not only a dedicated device for fuzzy inferences (either an analogue or digital type device) (see, for example, "NIKKEI ELECTRONICS", NIKKEI McGRAW HILL BOOK COMPANY, September 27, 1987, No. 426, pp. 148-152) but also a binary type computer, processor or the like programmed so as to implement fuzzy inferences.

In any case, membership functions concerning input and output variables and rules must be set in order to operate the fuzzy control device. The rules and the membership functions are mutually related, so that their designs made to obtain desired control performance are substantially complicated.

An appparatus according to the preamble of claim 1 and a method according to the preamble of claim 4 is known from SYSTEMS AND COMPUTERS IN JAPAN, vol. 19, no. 5, May 1988, pages 26-36, Scripta Technica, Inc., Silver Spring, MD, US; S. MORISHIMA et al.: "Automatic rule extraction from statistical data and fuzzy tree search", Translated from "DENSHI TSUSHIN GAKKAI ROMBUSHI", vol. 69D, no. 11, November 1986, pages 1754-1764.

### SUMMARY OF THE INVENTION

An object of the present invention is to provide an apparatus capable of automatically generating rules for fuzzy control, at least candidates for applicable rules.

The present invention also provides an apparatus capable of verifying whether or not a rule made or set is appropriate.

The rule means herein a rule of an IF-THEN type or a rule for a modus ponens inference.

A rule generating apparatus for fuzzy control comprises; means for storing a plurality of predetermined membership functions for fuzzy control concerning an input variable and a plurality of predetermined membership functions for fuzzy control concerning an output variable; means for inputting paired data comprising a predetermined input value and an output value to be obtained by a fuzzy inference when the predetermined input value is given; first processing means for finding degrees of adaptation of the given input value to the plurality of membership functions (grades of membership functions) concerning the input variable to extract a membership function concerning which the found degree of adaptation exceeds a required first reference degree of adaptation; second processing means for finding degrees of adaptation of the given output value to the plurality of membership functions concerning the output variable to extract a membership function concerning which the found degree of adaptation exceeds a required second reference degree of adaptation; and means for outputting the extracted membership functions concerning the input and output variables. This rule generating apparatus is applicable to not only a case in which there is one kind of input variable but also a case in which there are two or more kinds of input variables.

In this rule generating apparatus, the membership functions concerning the input and output variables are basically fixed. However, it is, of course, possible to repeat the generation of rules while changing the shapes of the membership functions.

The rule generating apparatus is particularly useful in a case in which an input value to a fuzzy control device and an output value corresponding thereto have been previously found. Data concerning the input value and the output value can be obtained from past data of the system to be controlled such as running data and operating data. In the rule generating apparatus according to the present invention, applicable rules or candidates to be employed as rules can be obtained only by entering a pair of the input value and the output value corresponding thereto. The generated rules may be used without any modification. Alternatively, only rules of particular use extracted from the generated rules by suitable selection based on simulation or the like can be used. According to the present invention, time or labor required to make rules can be significantly reduced in the above described manner.

A rule verifying apparatus for fuzzy control according to the present invention comprises; means for storing set rules and membership functions concerning input and output variables and related to the rules; means for specifying a rule to be excepted; inference means for subjecting a given or arbitrary input value to a fuzzy inference operation using rules excluding the rule specified as one to be excepted to obtain a corresponding output value; and means for outputting the output value obtained by the fuzzy inference operation.

According to the present invention, when a rule to be excepted is specified, a fuzzy inference is made in accordance with rules excluding the specified rule, to obtain the result thereof. Accordingly, the present invention is particularly effective in examining which rule is important out of a lot of applicable rules. Consequently, the number of rules to be finally set can be reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing a structure of a rule generating and verifying apparatus for fuzzy control;
Fig. 2 is a flow chart showing the procedure of rule generating processing;
Figs. 3 to 7 are diagrams showing an example of a display screen, where Figs. 3 to 5 illustrates the display screen in rule generating processing, and Figs. 6 and 7 illustrates the display screen in rule verifying processing; and
Fig. 8 is a diagram showing an example of a display screen in a case in which there are two types of input variables.

### DESCRIPTION OF THE PREFERRED EMBODIMENTS

A rule generating apparatus for fuzzy control according to the present invention is feasible by a binary type computer, for example, a microprocessor. In the present embodiment, the rule generating apparatus for fuzzy control is realized by an ordinary computer system including a CPU.

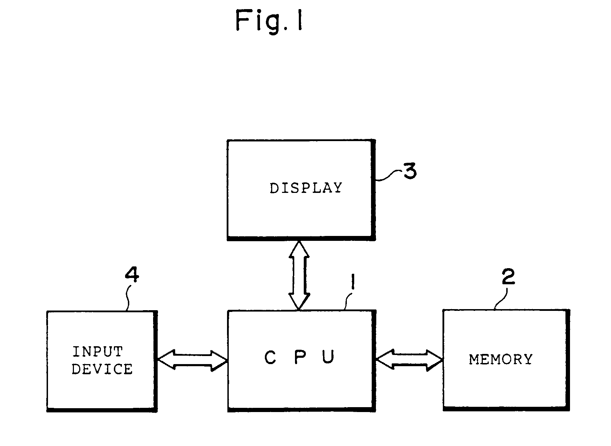

Fig. 1 is a diagram showing a schematic structure of a rule generating and verifying apparatus for fuzzy control, which comprises a CPU 1 for performing rule generating and verifying processing and a memory 2 connected thereto. The memory 2 stores membership functions concerning input and output variables and other data. The CPU 1 is further connected to a display device 3 and an input device 4. The display device 3 is, for example, a CRT (cathode ray tube) display device. Input and output values, the membership functions, generated rules and the like are displayed on the display device 3. The input device 4 comprises a mouse for specifying the positions of points indicating the input and output values on a display screen, keys attached to the mouse, and various function keys, a ten-key pad and the like provided on a keyboard. A printer, for example, in addition to the display device 3, may be connected as an output device.

In the present embodiment, we will consider membership functions expressed by linguistic information PL, PM, PS, ZR, NS, NM and NL. PL, PM, PS, ZR, NS, NM and NL respectively represent a positive large value, a positive medium value, a positive small value, almost zero, a negative small value, a negative medium value and a negative large value.

Let x and y, and z be respectively input variables and an output variable. When there is one kind of input variable (only x), an example of rules for fuzzy control is expressed as follows:
If x = NS then Z = NM
This indicates a rule "If x is NS, then z is NM".

When there are two kinds of input variables (x and y), an example of rules for fuzzy control is expressed as follows:
If x = NS and y = NM then z = NL
This indicates a rule "If x is NS and y is NM, then z is NL".

In the rule generating apparatus according to the present invention, the above described rules are automatically generated by providing the inputs x (and y) and the output z corresponding thereto (an output value to be obtained by a fuzzy inference when the inputs x (y) are applied).

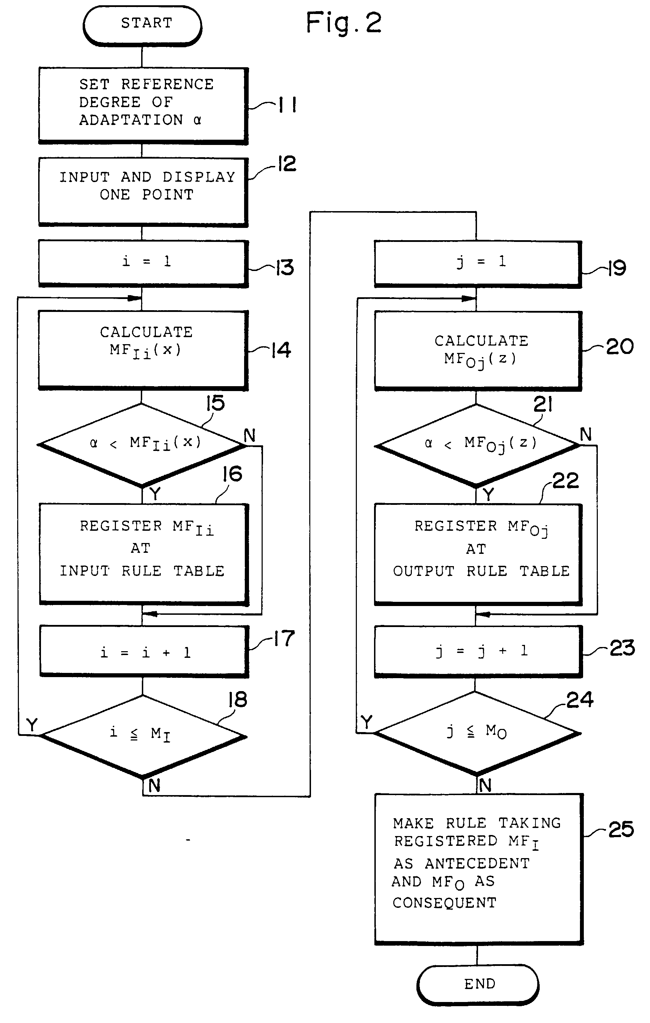

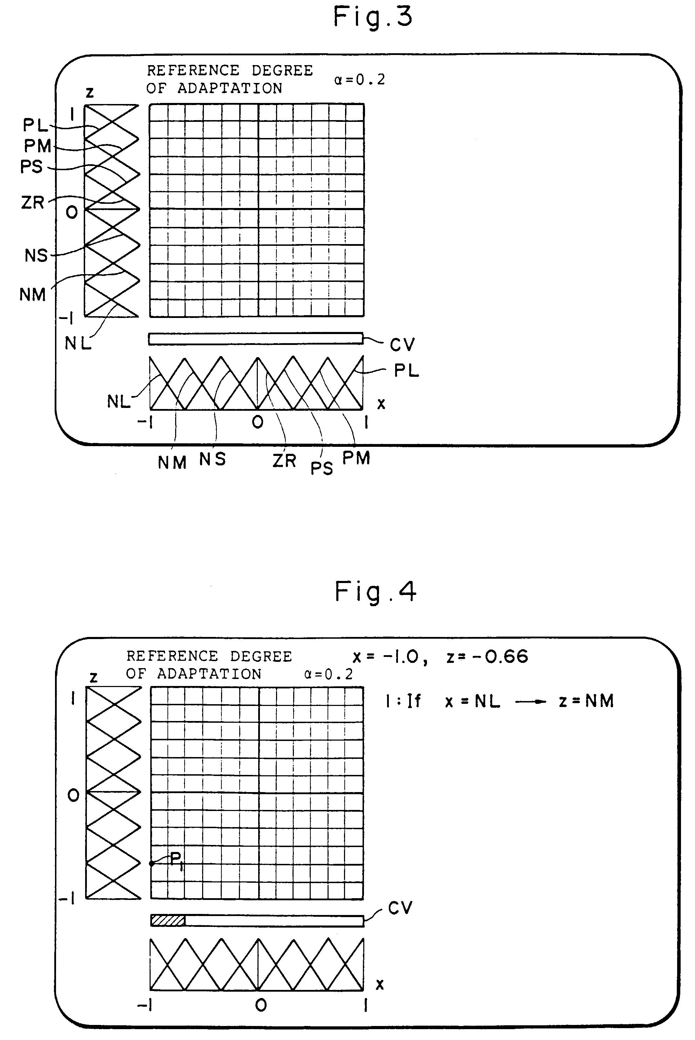

For simplicity, the procedure of rule generating processing performed when there is one kind of input variable (only x) will be described with reference to a flow chart of Fig. 2 and display screens shown in Figs. 3 to 5.

As shown in Fig. 3, a coordinate system comprising the axis of abscissa for the input variable x and the axis of ordinate for the output variable z and membership functions respectively concerning the input variable x and the output variable z with respect to the axis of abscissa and the axis of ordinate are displayed on the display screen of the display device 3. In the present embodiment, membership functions in the triangular shape are illustrated for simplicity. In addition, the membership function concerning the input variable x and the membership function concerning the output variable z are precisely the same. Such membership functions have been previously set in the memory 2. When all the membership functions take the same shape (the positions thereof are different), however, it is sufficient to previously store a membership function, for example, of ZR and shift the same on the x-axis and z-axis as required. A display band area CV for indicating a range of the input variable x covered with made rules is further displayed on the display screen.

First, a reference degree of adaptation α is entered from the keyboard of the input device 4 (step 11). This reference degree of adaptation α is used in determining whether or not a membership function is used as a candidate for a rule. When a function value of a membership function with respect to an input value is larger than this reference degree of adaptation α, the membership function is employed as a candidate for a rule. The reference degree of adaptation must be set respectively with respect to an input and an output. In this embodiment, a single degree of adaptation α = 0.2 is common to both the input and the output. The entered value α = 0.2 is displayed on the display device 3 (see Fig. 3).

Subsequently, a pair of a first input value x₁ and output value z₁ (point P₁ (x₁ = -1, z₁ = -0.66)) in the coordinate system on the display screen is inputted using the mouse of the input device 4 (step 12, see Fig. 4). When input of this point P₁ is completed (the point P₁ is fixed on the display screen), degrees of adaptation of the input value x₁ to all the membership functions concerning the input variable are respectively calculated, to extract a membership function or membership functions to be employed as a candidate for a rule or candidates for rules on the basis of the result of this calculation (steps 13 to 18).

MF_{Ii} is taken as a membership function concerning an input variable (i = 1 to M_{I}; M_{I} is the number of membership functions concerning the input variable; M_{I} = 7 in the present embodiment), and MF_{Ii}(x) is taken as a function value of the membership function with respect to the input value x, that is, a grade of membership function or a degree of adaptation.

i is set to 1 (step 13), MF_{Ii}(x) is calculated (step 14), it is determined whether or not MF_{Ii}(x) exceeds the reference degree of adaptation α (step 15), and MF_{Ii} is registered at an input rule table in the memory 2 if it exceeds the reference degree of adaptation α (step 16). After this processing is performed or if the answer is in the negative in the step 15, i is incremented (step 17). Processing in the steps 14 to 17 is repeated until i reaches M_{I} + 1.

Subsequently, degrees of adaptation of the output value z₁ to all the membership functions concerning the output variable are respectively calculated in the same manner, to extract a membership function to be employed as a candidate for a rule (steps 19 to 24).

MF_{Oj} is taken as a membership function concerning an output variable (j = 1 to M_{O}; M_{O} is the number of membership functions concerning the output variable; M_{O} = 7 in the present embodiment), and MF_{Oj}(z) is taken as a function value of the membership function with respect to the output value z, that is, a grade of membership function or a degree of adaptation.

Finally, a rule is made which respectively takes the membership function MF_{Ii} concerning an input variable registered at the rule table in the step 16 and the membership function MF_{Oj} concerning an output variable registered at an output rule table in the step 22 as an antecedent and a consequent. This rule is displayed on the display device 3 (step 25, see Fig. 4).

The registered membership functions MF_{I} and MF_{O} are respectively only NL and NM with respect to the point P₁. Accordingly, only one rule (rule 1) is made. "then" is represented by an arrow on the display screen. Furthermore, in the display band area CV on the display screen, a range of the input variable x covered with this rule 1 (i.e., membership function NL) is represented by hatching.

In the step 25, when a plurality of membership functions concerning input and output variables are registered, rules are made by a combination of these membership functions. For example, when the respective numbers of the registered membership functions MF_{I} and MF_{O} are two, a total of four rules are made.

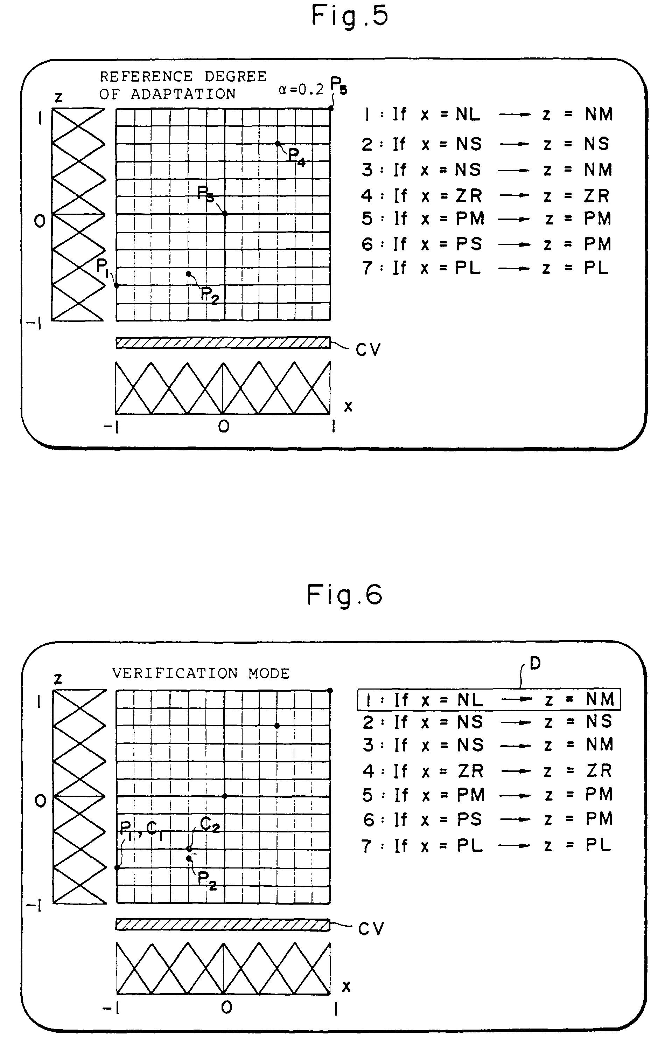

Every time a pair of an input value and an output value (point P₂, P₃, P₄, P₅ or the like) is inputted, the above described processing is performed. Fig. 5 illustrates an example of the display screen in a case in which the five points (P₁ to P₅) are inputted and making of rules related to the points is terminated. The rule 1 is made on the basis of the point P₁, as described above. Similarly, rules 2 and 3 are made on the basis of the point P₂, a rule 4 is made on the basis of the point P₃, rules 5 and 6 are made on the basis of the point P₄, and a rule 7 is made on the basis of the point P₅. The entire display band area CV is represented by hatching. Accordingly, it is found that all areas of the input variable x are completely covered with a range of definition of the membership functions which are related to the rules 1 to 7.

The rule generating and verifying apparatus according to the present invention can also verify whether or not correct fuzzy control can be achieved on the basis of the plurality of rules made in the above described manner.

The verifying operation includes verification and interpolation with respect to input points.

The verification with respect to the input points is achieved in the following manner. First, the input value x₁ representing the input point P₁ is subjected to a fuzzy inference using all the made rules 1 to 7 to obtain the result z_{c1} of the inference with respect to the corresponding output value z₁, thereby to display a point C₁ (x₁, z_{c1}). In an example of the display screen shown in Fig. 6, the input point P₁ and the point C₁ obtained by the inference are overlapped with each other, which indicates that the rules are appropriate. A known operation rule for fuzzy inference, for example, a MIN-MAX operation rule can be used for fuzzy inferences. Subsequently, in the same manner, an input value x₂ representing the input point P₂ is subjected to a fuzzy inference using all the rules, thereby to display a point C₂ (x₂, z_{c2}) obtained by the inference. In Fig. 6, the point C₂ is slightly shifted from the input point P₂. It is necessary for an operator to determine whether or not this shift is allowed. Similarly, each of input values representing the input points is subjected to a fuzzy inference using all the rules, thereby to display a point indicating the result of the inference on the display screen.

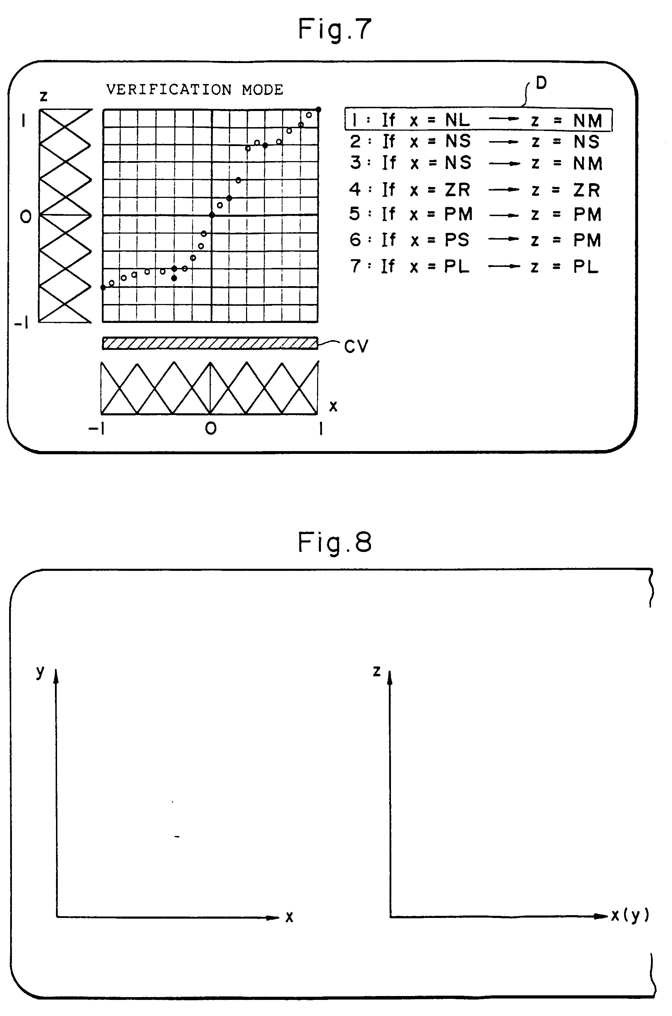

Verification by interpolation is achieved in the following manner. One or a plurality of interpolation points are selected between two points such as between input values x₁ and x₂ and between x₂ and x₃. The interpolation points may be set at constant intervals. The operator may enter the interpolation points using the input device 4 or the CPU 1 may automatically set the same. Each of the interpolation points is subjected to a fuzzy inference operation using all the rules so as to obtain an output value corresponding thereto. Points defined by the interpolation points (input values) (the x-coordinate) and the output values obtained by the inference (the z-coordinate) are represented by hollow circles on the coordinate system of the display screen as shown in Fig. 7. The operator can verify by watching this display whether or not inferences can be suitably implemented in places other than the input points using the made rules.

The significance of the made rules can be checked. This check is performed by excepting a rule to be checked from the inference operation. When a rule to be excepted is specified by the input device 4, the specified rule is enclosed with a frame D on the display screen as clearly shown in Figs. 6 and 7. The above described verification or interpolation with respect to the input points can be achieved using all rules other than the rule thus specified to be excepted, so that the results of inferences are displayed in the same manner. The operator can determine by watching this display whether the excepted rule is indispensable or is not necessarily required. Not only one but also a plurality of rules can be simultaneously specified as rules to be excepted.

The rule generating and verifying apparatus may be returned to the above described rule generation mode after such rule verifying processing. In the rule generation mode, a new rule can be generated or a rule made by the operator can be entered. Thereafter, the operation in the verification mode may be performed again. In some instances, rules may be generated or verified again in the same manner by changing the shapes of or modifying the membership functions.

Although in the above described embodiment, description was made of a case in which there is one kind of input variable, it should be noted that the present invention can be applied to a case in which there are two or more kinds of input variables. When there are two kinds of input variables x and y, two coordinate systems may be displayed on a display screen as shown in Fig. 8, the input variables x and y being specified by one of the coordinate systems, while an output variable z corresponding to the input variable x (or y) being specified by the other coordinate system. Input and output points can be also specified in three dimensions using the x, y and z coordinate system. The processing in the steps 13 to 18 shown in Fig. 2 is performed with respect to the other input variable y. In the step 25, a rule may be made by a combination of registered membership functions concerning each of the input variables x and y and registered membership functions concerning the output variable z.

As can be seen from Fig. 7, the apparatus according to the present invention can generate a non-linear function using made rules. Accordingly, the apparatus can be utilized as a function generator.

Although the present invention has been described and illustrated in detail, it is clearly understood that the same is by way of illustration and example only and is not to be taken by way of limitation, the scope of the present invention being limited only by the terms of the appended claims.

## Claims

1. A rule verifying apparatus for fuzzy inference comprising:
memory means (2) for storing set fuzzy rules and fuzzy membership functions concerning input and output variables and related to the set rules,
input means (4),
fuzzy inference means (1) connected to said memory means (2) and said input means (4) and which subjects an input value to a fuzzy inference operation,
output means (3) connected to said fuzzy inference means (1) which outputs the output value obtained by the fuzzy inference operation performed by said fuzzy inference means (1),
characterized in that
said input means (4) is an input means for specifying at least one rule to be temporarily excluded from said set of rules when the set of rules are used in a fuzzy inference operation; said at least one temporarily excluded rule remaining stored along with the other set rules,
said fuzzy inference means subjects said input value to said fuzzy inference operation using said stored rules excluding said at least one stored rule specified as being temporarily excluded, to obtain said output value.

2. A rule verifying apparatus according to claim 1, wherein said input means (4) is an input means for specifying a plurality of stored rules to be temporarily excluded.

3. A rule verifying apparatus according to claim 1 or 2, wherein said output means is a display device (3) for displaying said output value.

4. A rule verifying method for fuzzy inference comprising:
storing in a memory (2) set fuzzy rules and fuzzy membership functions concerning input and output variables and related to said set rules; characterized by
specifying with an input device (4) at least one stored rule to be temporarily excluded from said set rules when the set rules are used in a fuzzy inference operation, said at least one temporarily excluded rule remaining stored along with the other set rules;
subjecting an input value to a fuzzy inference operation with a fuzzy inference processor using said stored set rules excluding said at least one rule specified as being temporarily excluded, to obtain a corresponding output value; and
outputting said output value obtained by said fuzzy inference operation to an output device (3).

5. A rule verifying method for fuzzy control according to claim 4, wherein said specifying step specifies a plurality of stored rules to be temporarily excluded from said set rules.

6. A rule verifying method for fuzzy control according to claim 4 or 5, wherein said outputting step displays said output value on a display device (3).

## Patentansprüche

1. Regelverifizierungsvorrichtung für Fuzzy-Schlußfolgerung, mit
Speichermitteln (2) zum Speichern gesetzter Fuzzy-Regeln und Fuzzy-Zugehörigkeitsfunktionen betreffend Eingangs- und Ausgangsvariable und zu den gesetzten Regeln in Beziehung stehend,
Eingabemitteln (4),
Fuzzy-Schlußfolgerungsmitteln (1), die mit den Speichermitteln (2) und den Eingabemitteln (4) verbunden sind und einen Eingabewert einem Fuzzy-Schlußfolgerungsvorgang unterwerfen,
mit den Fuzzy-Schlußfolgerungsmitteln (1) verbundenen Ausgabemitteln (3), welche den Ausgabewert, der durch den mit den Fuzzy-Schlußfolgerungsmitteln (1) durchgeführten Fuzzy-Schlußfolgerungsvorgang gewonnen ist, ausgeben,
dadurch gekennzeichnet, daß
die Eingabemittel (4) Eingabemittel zum Spezifizieren wenigstens einer Regel sind, die vorübergehend aus dem Satz von Regeln auszuschließen ist, wenn der Satz von Regel in einem Fuzzy-Schlußfolgerungsvorgang verwendet wird, wobei die wenigstens eine vorübergehend ausgeschlossene Regel zusammen mit den anderen gesetzten Regeln gespeichert verbleibt,
die Fuzzy-Schlußfolgerungsmittel den Eingabewert dem Fuzzy-Schlußfolgerungsvorgang unter Verwendung der gespeicherten Regeln unter Auschluß der wenigstens einen Regel, die als vorübergehend ausgeschlossen spezifiziert ist, unterwirft, um den Ausgabewert zu erhalten.

2. Regelverifizierungsvorrichtung nach Anspruch 1, wobei die Eingabemittel (4) Eingabemittel zur Spezifizierung einer Anzahl gespeicherter Regeln, die vorübergehend auszuschließen sind, sind.

3. Regelverifizierungsvorrichtung nach Anspruch 1 oder 2, wobei die Ausgabemittel eine Anzeigevorrichtung (3) zur Anzeige des Ausgabewerts sind.

4. Regelverifizierungsverfahren für Fuzzy-Schlußfolgerung, welche
das Speichern in einem Speicher (2) von gesetzten Fuzzy-Regeln und Fuzzy-Zugehörigkeitsfunktionen betreffend Eingangs- und Ausgangsvariable und zu den gesetzten Regeln in Beziehung stehend aufweist, gekennzeichnet durch das
Spezifizieren mit einer Eingabevorrichtung (4) von wenigstens einer gespeicherten Regel die vorübergehend aus den gesetzten Regeln auszuschließen ist, wenn die gesetzten Regeln in einem Fuzzy-Schlußfolgerungsvorgang verwendet werden, wobei die wenigstens eine vorübergehend ausgeschlossene Regel zusammen mit den anderen gesetzten Regeln gespeichert verbleibt,
Unterwerfen eines Eingangswerts einem Fuzzy-Schlußfolgerungsvorgang mit einem Fuzzy-Schlußfolgerungsprozessor unter Verwendung der gespeicherten gesetzten Regeln unter Ausschluß der wengistens einen Regel, die als vorübergehend ausgeschlossen spezifiziert ist, zur Gewinnung eines entsprechenden Ausgabewerts, und
Ausgeben des mit dem Fuzzy-Schlußfolgerungsvorgang gewonnenen Ausgabewerts an eine Ausgabevorrichtung (3).

5. Regelverifizierungsverfahren für Fuzzy-Steuerung nach Anspruch 4, wobei der Spezifizierungsschritt eine Anzahl gespeicherter Regeln als vorübergehend aus den gesetzten Regeln auszuschließen spezifiziert.

6. Regelverifizierungsverfahren für Fuzzy-Steuerung nach Anspruch 4 oder 5, wobei der Ausgabeschritt den Ausgabewert auf einer Anzeigevorrichtung (3) anzeigt.

## Revendications

1. Un appareil vérificateur de règles pour inférence floue, comprenant:
un moyen de mémorisation (2) d'un ensemble de règles floues, et de fonctions d'appartenance concernant des variables d'entrée et de sortie et liées à l'ensemble de règles,
un moyen d'entrée (4),
un moyen d'inférence floue (1) qui est connecté audit moyen de mémoire (2) et audit moyen de d'entrée (4) et soumet une valeur d'entrée à une opération d'inférence floue,
un moyen de sortie (3) connecté audit moyen d'inférence floue (1) qui sort la valeur de sortie obtenue par l'opération d'inférence floue effectuée par ledit moyen d'inférence floue (1),
caractérisé en ce que
ledit moyen d'entrée (4) est un moyen d'entrée destiné à spécifier au moins une règle particulière à exclure temporairement dudit ensemble de règles lorsque l'ensemble de règles est utilisé dans une opération d'inférence floue; ladite règle particulière au moins, exclue temporairement, restant mémorisée avec les autres règles de l'ensemble,
ledit moyen d'inférence floue soumet ladite valeur d'entrée à ladite opération d'inférence floue en utilisant lesdites règles mémorisées à l'exclusion de ladite règle particulière au moins, spécifiée comme étant temporairement exclue, afin d'obtenir une valeur de sortie correspondante.

2. Un appareil vérificateur de règles selon la revendication 1 dans lequel ledit moyen d'entrée (4) est un moyen d'entrée destiné à spécifier une série de règles mémorisées à exclure temporairement.

3. Un appareil vérificateur de règles selon la revendication 1 ou 2, dans lequel ledit moyen de sortie est un dispositif d'affichage (3) destiné à afficher ladite valeur de sortie.

4. Un procédé de vérification de règles pour inférence floue comprenant :
une mémorisation, dans une mémoire (2), d'un ensemble de règles floues, et de fonctions d'appartenance concernant des variables d'entrée et de sortie et liées aux règles de l'ensemble, caractérisé par les étapes consistant à
spécifier à l'aide d'un moyen d'entrée (4) au moins une règle particulière mémorisée à exclure temporairement dudit ensemble de règles lorsque l'ensemble de règles est utilisé dans une opération d'inférence floue; ladite règle particulière au moins, exclue temporairement, restant mémorisée avec les autres règles de l'ensemble,
soumettre une valeur d'entrée à une opération d'inférence floue à l'aide d'un microprocesseur d'inférence floue en utilisant ledit ensemble de règles mémorisées à l'exclusion de ladite règle particulière au moins, spécifiée comme étant temporairement exclue, afin d'obtenir une valeur de sortie correspondante; et
sortir à un dispositif de sortie (3) la valeur de sortie obtenue par ladite opération d'inférence floue.

5. Un procédé de vérification de règles de commande floue selon la revendication 4, dans lequel ladite étape de spécification spécifie une série de règles mémorisées à exclure temporairement dudit ensemble de règles.

6. Un procédé de vérification de règles de commande floue selon la revendication 4 ou 5, dans lequel ladite étape de sortie affiche ladite valeur de sortie sur un dispositif d'affichage (3).
